# FASCICULE DE BREVET EUROPEEN

(11) **EP 2 084 056 B1**
(45) Date de publication et mention de la délivrance du brevet: **03.11.2010**
(21) Numéro de dépôt: 07870256.0
(22) Date de dépôt: 07.11.2007
(51) Int. Cl.: B64B 1/50, B64B 1/60, B64C 37/02

(54) **DISPOSITIF SECURISE DE TRANSPORT ET DE STOCKAGE D'HYDROGENE**
SICHERE VORRICHTUNG ZUM TRANSPORT UND ZUR SPEICHERUNG VON WASSERSTOFF
SECURE DEVICE FOR TRANSPORTING AND STORING HYDROGEN

(30) Priorité: 13.11.2006 FR 0609960
(43) Date de publication de la demande: 05.08.2009
(73) Titulaire: Montésinos, Philippe Marc, 30620 Bernis (FR)
(72) Inventeur: Montésinos, Philippe Marc, 30620 Bernis (FR)
(86) Numéro de dépôt international: PCT/FR2007/001840
(87) Numéro de publication internationale: WO 2008/059144

(56) Documents cités:
- DE-A1- 3 634 101
- DE-A1- 10 203 431
- GB-A- 215 923
- GB-A- 2 393 171
- JP-A- 2003 306 196
- US-A- 3 227 398
- US-A- 4 640 474
- US-A1- 2002 113 166
- US-B1- 6 422 506

## Description

La présente invention concerne un dispositif sécurisé de transport et de stockage d'hydrogène gazeux.

De nombreux documents décrivent de tels dispositifs.

Parmi ceux-ci on peut citer le brevet DE3634101, qui montre toutes les caractéristique du préambule de la revendication indépendante et décrit un aérostat rigide de type "Zeppelin", piloté par des pilotes se trouvant à bord de l'aérostat, dont la motricité est assurée par des hélices et des moteurs se trouvant à bord de l'aérostat, tout cela alourdissant l'aérostat, l'hydrogène transporté étant stocké dans des réservoirs sphériques rigides, l'hydrogène transporté ne participant pas à la sustentation de l'aérostat et l'alourdissant, l'aérostat faisant le voyage de retour rempli d'hydrogène à la pression atmosphérique.

L'hydrogène en tant que vecteur énergétique va connaître un grand développement, il doit remplacer les énergies fossiles (pétrole, gaz, charbon) qui sont très polluantes (pollution de l'air des villes, augmentation de l'effet de serre, pluies acides, etc), dont les réserves s'épuisent, et dont la production ne parvient plus à répondre aux besoins énergétiques mondiaux.

L'hydrogène ne génère pas de pollution et présente l'avantage de pouvoir générer de l'électricité dans des piles à combustible, de pouvoir être utilisé comme combustible de la même façon que le gaz naturel, ou comme carburant dans les moteurs à combustion interne des voitures, etc.

L'hydrogène n'existe pas tel quel dans la nature, il doit être produit, par exemple par électrolyse de l'eau, et de préférence à l'aide d'énergies renouvelables comme l'énergie solaire.

Les zones de production d'hydrogène à partir d'énergie solaire les plus avantageuses sont les zones désertiques chaudes, car il y a une forte insolation et beaucoup de surfaces non utilisées.

Dans le brevet FR2874975 il est décrit un moyen de produire de l'hydrogène dans des zones désertiques à l'aide d'énergie solaire à un prix très bas.

Mais une fois produit, cet hydrogène doit être stocké et transporté depuis les zones de production désertiques vers les zones d'utilisation qui peuvent être distantes de plusieurs centaines de kilomètres à plusieurs milliers de kilomètres.

Par exemple depuis le Sahara jusqu'aux côtes du sud de l'Europe, ou depuis le centre de l'Australie qui est désertique jusqu'aux côtes de l'Australie qui sont peuplées, etc.

Ce transport doit lui aussi être effectué au prix le plus bas possible, avec une grande flexibilité, et une montée en puissance des volumes transportés et avec une grande sécurité.

Un moyen simple et sûr de transporter de l'hydrogène est d'utiliser un gazoduc, cette solution largement utilisée est techniquement très bien maîtrisée, plusieurs centaines de kilomètres de gazoducs transportent de l'hydrogène en Europe et en Amérique du Nord.

Et des milliers de kilomètres de gazoducs similaires transportent du gaz naturel dans le monde entier.

Les gazoducs peuvent être terrestres ou sous-marins, et permettent de relier des zones de production et des zones d'utilisation distantes de plusieurs centaines de kilomètres. Cette solution comporte néanmoins certains inconvénients : un gazoduc est long à construire et coûte très cher (travaux de terrassement, pose du gazoduc, stations de compression, etc).

Le transport par gazoduc demande de recomprimer le gaz le long du parcours avec des compresseurs répartis le long du gazoduc, ce qui a un certain coût énergétique.

De plus le transport par gazoduc n'est pas du tout flexible, il se prête mal au transport de volumes qui vont être faibles au début de l'économie de l'hydrogène, puis très importants par la suite, il y a un problème de dimensionnement.

La transition de l'utilisation d'énergies fossiles (pétrole, gaz, charbon) vers une économie de l'hydrogène, c'est à dire l'utilisation massive de l'hydrogène comme vecteur énergétique non polluant pour la production d'électricité, le chauffage, la propulsion automobile, etc, va se faire progressivement, il est donc très difficile (au moins dans un premier temps) d'investir dans des gazoducs qui seront sous utilisés au début, et trop petits quand l'économie de l'hydrogène sera arrivée à maturité.

De plus la réalisation d'un réseau de gazoducs demande des investissements énormes.

Or pour s'imposer face aux énergies fossiles, l'hydrogène doit être disponible auprès des utilisateurs à un prix compétitif.

Ce paramètre est fondamental, si l'hydrogène coûte plus cher à l'utilisateur que les énergies fossiles le succès sera limité malgré l'aspect écologique.

Le transport de l'hydrogène doit donc impérativement être le moins cher possible.

Pour développer un réseau de gazoducs transportant l'hydrogène, il faut des utilisateurs, pour avoir des utilisateurs, il faut que l'hydrogène soit bien distribué, c'est le problème de l'oeuf et de la poule, qui doit être présent en premier ?

L'hydrogène peut aussi être transporté et stocké en étant comprimé entre 200 et 700 bars, il faut des réservoirs lourds et chers, et sur de longues distances ce n'est pas rentable du point de vue énergétique et économique.

L'hydrogène peut aussi être liquéfié et transporté par camion citerne, ou par navire de type méthanier.

Mais l'hydrogène a une température de liquéfaction très basse : moins 252,85° Celsius (20,3° Kelvin), et la liquéfaction de l'hydrogène requière une grande quantité d'énergie, environ 40% de la valeur énergétique d'un volume d'hydrogène gazeux à la température de 20° Celsius est nécessaire pour liquéfier ce même volume d'hydrogène.

De plus l'hydrogène gazeux se trouve sous deux formes l'ortho-hydrogène (75%) et le para-hydrogène (25%). Il faut convertir l'ortho-hydrogène en para-hydrogène avant de le liquéfier pour avoir une plus grande stabilité.

Et malgré cela, il faut relâcher au moins 1% de l'hydrogène chaque jour pour des raisons de sécurité.

La construction d'installations de liquéfaction de l'hydrogène coûte cher, et pour maintenir l'hydrogène liquide à ces basses températures il faut des réservoirs très bien isolés thermiquement et donc très chers.

L'hydrogène est très difficile à transporter de façon économiquement intéressante en dehors des gazoducs.

Le transport maritime ou terrestre de l'hydrogène par véhicule est très peu rentable du fait de la faible masse volumique de l'hydrogène : un mètre cube d'hydrogène à la pression atmosphérique et à la température de 0° Celsius pèse 0,08988 Kg, et même une fois comprimé, il est peu rentable de transporter de gros volumes dont la masse est extrêmement faible.

Cette caractéristique physique particulière de l'hydrogène d'avoir une très faible masse volumique à l'état gazeux de 0,08988 Kg par Nm3 est un très gros inconvénient de l'hydrogène.

Dans la présente invention nous faisons de cet inconvénient majeur de l'hydrogène un atout pour son transport.

L'objet de l'invention, telle que défini par la revendication indépendante, consiste à placer cet hydrogène dans un aérostat de grand volume et à le tracter avec un véhicule terrestre ou avec un bateau ou avec un autre aérostat.

Un mètre cube d'air à la pression atmosphérique et à la température de 0° Celsius pèse 1,293 Kg.

L'hydrogène possède la caractéristique d'être 14,38 fois plus léger que l'air, ce qui le fît utiliser dans les ballons dirigeables aussi appelés "plus légers que l'air" pour le transport de voyageurs ou de matériel.

Dans tous les cas où l'hydrogène a été utilisé dans l'aérostation il a servi de moyen de sustentation des aérostats (à une pression équivalente à la pression atmosphérique), ou de moyen de propulsion des aérostats en étant brûlé par exemple dans un moteur à combustion interne actionnant une hélice, ou avec une pile à combustible.

Dans la présente invention on reprend l'idée du ballon gonflé à l'hydrogène, mais en changeant la fonction de l'hydrogène.

Dans la présente invention l'hydrogène est le produit qui est transporté par l'aérostat à l'intérieur même de l'aérostat.

De moyen du transport, il devient l'objet du transport.

Le ballon a la caractéristique de pouvoir transporter un volume considérable de gaz.

Par ballon on entend toute forme d'aérostat plus léger que l'air, qu'il soit souple, semi-rigide ou rigide.

Le ballon peut être rigide, c'est à dire de type "Zeppelin", mais ce type de ballon est lourd, cher, complexe et long à construire, il nécessite beaucoup d'entretien et de vérifications, et a une moindre résistance au vent et aux chocs.

Le ballon peut être semi-rigide, mais on préférera un ballon souple, constitué d'une enveloppe imperméable à l'hydrogène. Les ballons souples sont très légers, faciles et rapides à construire, résistants aux chocs, d'un prix bas et plus sûrs. Les ballons peuvent avoir toutes sortes de formes : sphère, soucoupe, etc, mais on préférera une forme de cigare qui est plus aérodynamique.

Dans le cas des ballons souples, la forme du ballon est donnée par la pression interne exercée par l'hydrogène.

De même que les navires pétroliers permettent de transporter un liquide (le pétrole) sur un autre liquide (la mer), les ballons permettent de transporter un gaz (l'hydrogène) dans un autre gaz (l'air atmosphérique). L'aérostat rempli la même fonction que les pétroliers ou les méthaniers : transporter le combustible sur les mers, une fois arrivés sur les côtes, les pétroliers ou les méthaniers transfèrent leur cargaison vers des oléoducs ou des gazoducs. Le transport d'hydrogène par aérostat sécurisé est plus sûr que le transport de combustible par les méthaniers et les pétroliers : il est possible de vider rapidement l'aérostat de l'hydrogène transporté, il n'y a pas d'être humain à proximité, il n'y a pas de risque de collision avec un bateau.

Une fois l'hydrogène transporté sur les côtes des pays utilisateurs, il est acheminé par gazoduc comme depuis les terminaux méthaniers classiques.

Le ballon selon l'invention permet en plus de sa fonction de transport d'avoir une fonction de stockage sécurisé, au départ sur le lieu de production, et à l'arrivée sur les lieux d'utilisation, cette forme de stockage est très sûre et bon marché.

L'hydrogène peut ensuite être envoyé dans des gazoducs, et de plus on a de l'hydrogène qui est déjà partiellement comprimé.

Malheureusement l'hydrogène a aussi la caractéristique d'être très inflammable et explosif, ce qui le fît abandonner au profit de l'hélium qui est un gaz inerte donc ininflammable et inexplosible, donc plus sûr.

Tenant compte de cette dangerosité de l'hydrogène, le dispositif objet de l'invention met en oeuvre de nombreuses techniques afin d'avoir un mode de transport et de stockage de l'hydrogène présentant le maximum de sécurités possibles. Afin qu'aucun opérateur humain ne soit ni dans le ballon ni à proximité du ballon, celui-ci est tracté à l'aide d'un câble par un véhicule terrestre spécialement construit dans ce but, ou par un navire spécialement construit dans ce but, ce qui de plus allège le ballon qui n'a plus à assurer sa motricité, il n'est pas alourdi par des moteurs pour sa propulsion, ni par le combustible nécessaire, ni par du personnel à bord, ce qui entraînerait une énorme perte de capacité de transport. De plus, la motricité est plus efficace avec un véhicule terrestre ou avec un navire qu'avec des hélices dans l'air. Le véhicule tracteur constitue un solide point d'amarrage pour le ballon en cas de vent.

Il est aussi possible depuis le véhicule tracteur de lester ou de délester le ballon pour régler son altitude. Néanmoins, il est aussi possible de tracter l'aérostat où est stocké l'hydrogène avec un autre aérostat qui a uniquement une fonction de traction.

La caractéristique de l'hydrogène d'être 14,38 fois plus léger que l'air lui permet d'avoir un pouvoir sustentateur même s'il est comprimé à une pression de 10 bars.

Avec le système d'aérostat tracté, on peut transporter un très gros volume d'hydrogène à l'aide d'un camion tracteur de taille moyenne, ou d'un bateau tracteur de taille moyenne, alors qu'autrement il faudrait des véhicules de tailles gigantesques.

Le système de ballon tracté permet d'utiliser le même moyen de transport rempli une seule fois, sur terre et sur mer, on change simplement le véhicule tractant le ballon.

Par exemple, de l'hydrogène produit en utilisant l'énergie solaire selon l'invention objet du brevet FR2874975 dans un désert du Sahara, est chargé dans un ballon qui est tracté par un camion jusqu'aux côtes méditerranéennes, puis qui est tracté par un bateau jusqu'aux côtes sud de l'Europe (Espagne, France, Italie, Grèce).

Par exemple si l'hydrogène est produit dans le Désert Libyque en Egypte, il peut facilement être transporté à Athènes en Grèce, ou de l'hydrogène produit au sud de la Tunisie peut facilement approvisionner la majorité des villes d'Italie, et être envoyé dans toute l'Europe via un réseau de gazoducs. L'hydrogène pouvant avantageusement être mélangé jusqu'à 20% au gaz naturel, et utilisé ainsi, sans modification des gazoducs.

Le moyen de transport objet de l'invention nécessite peu d'énergie pour transporter de grands volumes de gaz.

Ce mode de transport est très flexible, et permet une desserte de très nombreux points situés sur les côtes des mers, ou permet le transport d'hydrogène de l'intérieur des terres vers des zones peuplées.

Ce moyen ne nécessite pas d'infrastructures, hormis pour le stockage du ballon au départ et à l'arrivée.

Malgré toutes les sécurités présentent dans le moyen de transport de l'hydrogène objet de l'invention, ce moyen de transport est destiné à être utilisé dans des zones désertiques et sur les mers.

Premièrement pour des raisons de sécurité, deuxièmement pour des raisons pratiques simples, on ne peut pas passer où il y a des lignes électriques ou téléphoniques (à moins de les enterrer partiellement), ou sous les ponts, ou là où le câble pourrait s'accrocher dans des arbres, etc.

D'autres caractéristiques et avantages de l'invention ressortiront de la description qui va suivre, donnée uniquement à titre d'exemple non limitatif, en référence aux dessins annexés dans lesquels :
La figure 1 de la planche 1/7 représente une vue schématique d'un aérostat rempli d'hydrogène tracté par un véhicule terrestre.
La figure 2 de la planche 1/7 représente une vue schématique d'un aérostat rempli d'hydrogène tracté par un bateau.
La figure 3 de la planche 2/7 représente une vue schématique en coupe d'un aérostat rempli d'hydrogène.
La figure 4 de la planche 2/7 représente une vue schématique en coupe d'un aérostat ayant une poche remplie d'hélium, et dont on a commencé à faire le plein d'hydrogène.
La figure 5 de la planche 2/7 représente une vue schématique en coupe d'un aérostat ayant une poche remplie d'hélium, et dont le plein d'hydrogène est fait.
La figure 6 de la planche 2/7 représente une vue schématique en coupe d'un aérostat ayant une poche remplie d'hélium, et qui a été vidé de l'hydrogène transporté.
La figure 7 de la planche 3/7 représente une vue schématique en coupe d'un aérostat ayant un ballonnet pour le lestage par un liquide.
La figure 8 de la planche 3/7 représente une vue schématique en coupe d'un aérostat sécurisé par une double enveloppe et de l'hélium.
La figure 9 de la planche 4/7 représente une vue schématique en coupe d'un aérostat sécurisé ayant un dispositif de vidange de l'hydrogène.
La figure 10 de la planche 5/7 représente une vue schématique en coupe d'un camion conçu pour tracter les aérostats remplis d'hydrogène.
La figure 11 de la planche 5/7 représente une vue schématique de dessus d'un camion conçu pour tracter les aérostats remplis d'hydrogène.
La figure 12 de la planche 6/7 représente une vue schématique en coupe d'un bateau conçu pour tracter les aérostats remplis d'hydrogène.
La figure 13 de la planche 6/7 représente une vue schématique de dessus d'un bateau conçu pour tracter les aérostats remplis d'hydrogène.
La figure 14 de la planche 7/7 représente une vue schématique d'un aérostat rempli d'hydrogène tracté par un autre aérostat.
La figure 15 de la planche 7/7 représente une vue schématique en coupe d'un câble permettant de tracter un aérostat.

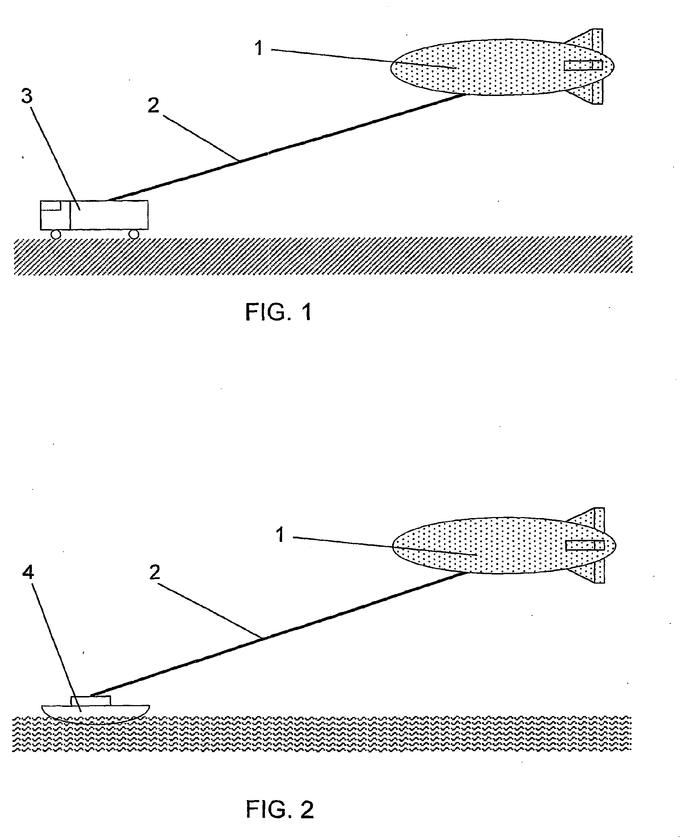

On a dessiné sur la figure 1 de la planche 1/7 une vue schématique d'un aérostat (1) rempli d'hydrogène tracté par un véhicule terrestre (3).

On a dessiné sur la figure 2 de la planche 1/7 une vue schématique d'un aérostat (1) rempli d'hydrogène tracté par un bateau (4).

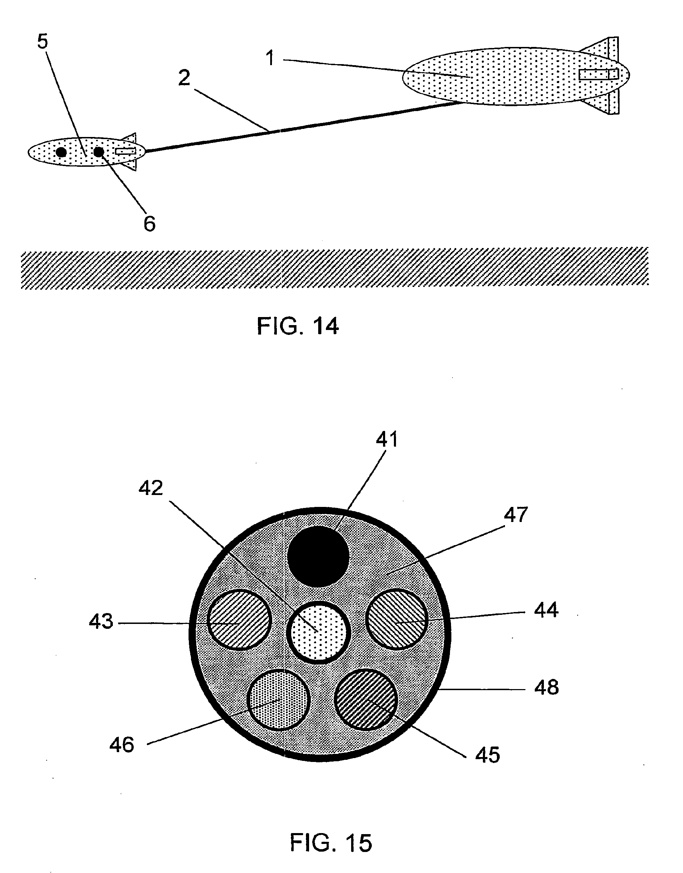

On a dessiné sur la figure 14 de la planche 7/7 une vue schématique d'un aérostat (1) rempli d'hydrogène tracté par un autre aérostat (5).

Un aérostat (1) rempli d'hydrogène est tracté à l'aide d'un câble (2) par un véhicule terrestre (3) ou par un bateau (4) ou par un autre aérostat (5).

Le câble de tractage (2) peut être par exemple en fibres aramides ou en fibre de carbone qui sont plus solides et plus légères que l'acier.

Sur chaque câble tracteur (2) il y a en plus :
- un câble électrique pour l'alimentation électrique du ballon (1) depuis le véhicule tracteur (3) ou (4) ou (5), pour l'éclairage de nuit, les instruments de mesure, les dispositifs pour diriger le ballon (1), etc;
- un câble pour la transmission vers le véhicule tracteur (3) ou (4) ou (5) des données mesurées par les instruments de mesure placés sur le ballon (1);
- un câble pour la transmission de commandes depuis le véhicule tracteur (3) ou (4) ou (5) vers le ballon (1) ;
- un tuyau pour lester ou délester le ballon (1) depuis le véhicule tracteur (3) ou (4) ou (5);
- un câble pour évacuer l'électricité statique du ballon (1) vers le véhicule tracteur (3) ou (4) afin de limiter les risques de foudre sur le ballon (1), l'évacuation des charges électrostatiques se fait vers le sol ou dans la mer.
   Des appareils de mesure sont présents dans le ballon (1) et dans le véhicule tracteur (3) ou (4) ou (5), afin de connaître la force du vent et sa direction, la température, l'altitude du ballon (1), la vitesse de déplacement, etc, les données peuvent aussi être envoyées en plus par onde radio pour plus de sécurité.

Sur l'aérostat (1) il y a des dispositifs pour contrôler la direction de l'aérostat (1) et sa position latérale et verticale, avec des gouvernails de profondeur, etc, mais on préférera des hélices orientables permettant de déplacer latéralement ou verticalement l'aérostat (1).

Dans le cas où l'aérostat (1) transportant l'hydrogène est tracté par un autre aérostat (5), la force motrice de cet aérostat (5) est fournie par des hélices orientables (6). L'aérostat tracteur (5) ne contient que de l'hélium pour des raisons de sécurité.

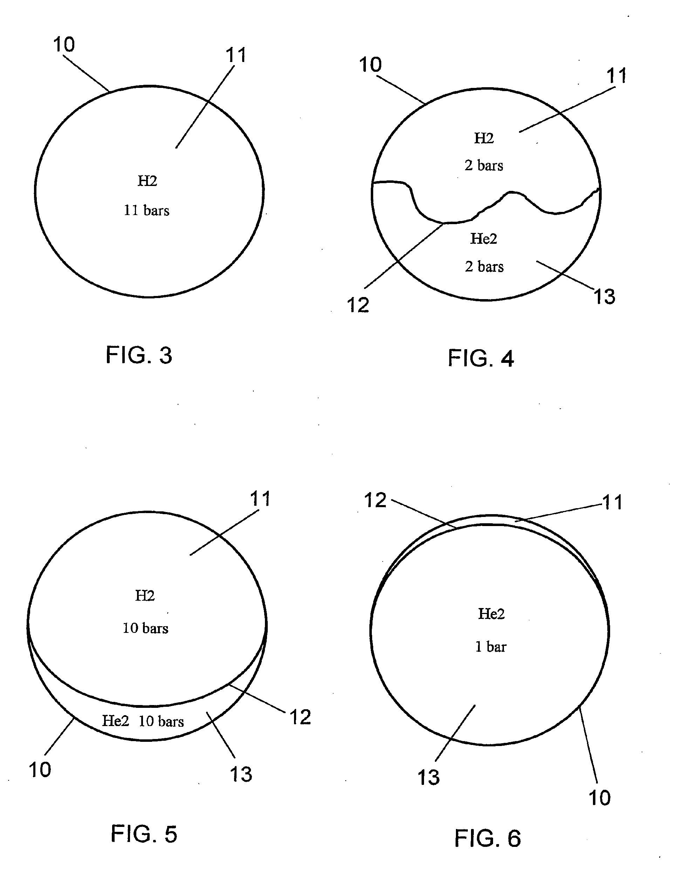

On a dessiné sur la figure 3 de la planche 2/7 une vue schématique en coupe d'un aérostat rempli d'hydrogène.

Dans une forme primaire, l'aérostat (1) transportant l'hydrogène (11) peut être constitué d'une simple enveloppe (10) étanche à l'hydrogène, plusieurs matériaux sont habituellement utilisés dans l'aérostation : le "Dacron", le "Mylar", etc.

Mais on emploiera plutôt des fibres aramides, par exemple du "Kevlar" pour la solidité et le faible poids, associé par exemple avec du polyéthylène très haute densité pour éviter les fuites d'hydrogène.

Les fibres aramides sont de plus ininflammables, très résistantes au déchirement, inextensibles, et ont une dilatation thermique nulle.

L'hydrogène étant 14,38 fois plus léger que l'air, on peut comprimer l'hydrogène à une pression de 10 à 13 bars tout en ayant encore une force de sustentation permettant au ballon de voler.

Plus le ballon vide est léger plus on peut comprimer l'hydrogène (en dessous de 14 bars), et ainsi transporter plus d'hydrogène.

Le ballon (1) est rempli par exemple d'hydrogène comprimé à une pression de 11 bars, donc ce qui correspond à 11 fois le volume du ballon (1) d'hydrogène à la pression de 1 bar. Arrivé à destination il est vidé jusqu'à ce qu'il reste de l'hydrogène à une pression de 1 bar (le ballon (1) est donc vidé de 10 fois le volume du ballon (1) d'hydrogène).

Le ballon (1) revient vers le lieu de production d'hydrogène avec un seul volume d'hydrogène à une pression de 1 bar qui lui permet de voler, et maintient la rigidité de l'enveloppe (10) du ballon (1).

On a dessiné sur la figure 4 de la planche 2/7 une vue schématique en coupe d'un aérostat ayant une poche (13) remplie d'hélium, et dont on a commencé à faire le plein d'hydrogène (11).

Pour des raisons de sécurité, afin d'éviter d'effectuer le voyage de retour avec un ballon (1) contenant un volume d'hydrogène à une pression de 1 bar, on peut utiliser une solution simple : on place une membrane souple (12) étanche à l'hydrogène séparant une partie (11) contenant l'hydrogène et une partie (13) contenant une fois le volume du ballon d'un gaz inerte par exemple de l'hélium à une pression de 1 bar. L'hélium présente l'avantage d'être un gaz inerte et d'être le gaz le plus léger après l'hydrogène.

On a dessiné sur la figure 5 de la planche 2/7 une vue schématique en coupe d'un aérostat ayant une poche (13) remplie d'hélium, et dont le plein d'hydrogène (11) est fait.

On peut ainsi par exemple remplir la partie (11) d'hydrogène à une pression de 10 bars, la partie (13) contenant l'hélium se trouve ainsi elle aussi comprimée à une pression de 10 bars.

On a dessiné sur la figure 6 de la planche 2/7 une vue schématique en coupe d'un aérostat ayant une poche (13) remplie d'hélium, et dont la poche (11) a été vidée de l'hydrogène transporté.

Une fois l'aérostat (1) vidé de l'hydrogène transporté, il ne reste que de l'hélium à une pression de 1 bar dans la poche (13) prévue à cet effet.

Il est plus sûr de revenir vers les lieux de production d'hydrogène avec un ballon (1) contenant uniquement de l'hélium, qui est ininflammable contrairement à l'hydrogène.

L'hélium pèse 0,1785 Kg par mètre cube à la pression de 1 bar et à la température de 0° Celsius.

La force ascensionnelle de l'hélium est de 92,64% de celle de l'hydrogène.

Le ballon (1) revient donc vers le lieu de production de l'hydrogène avec un seul volume d'hélium à une pression de 1 bar qui lui permet de voler, et maintient la rigidité de l'enveloppe (10) du ballon (1).

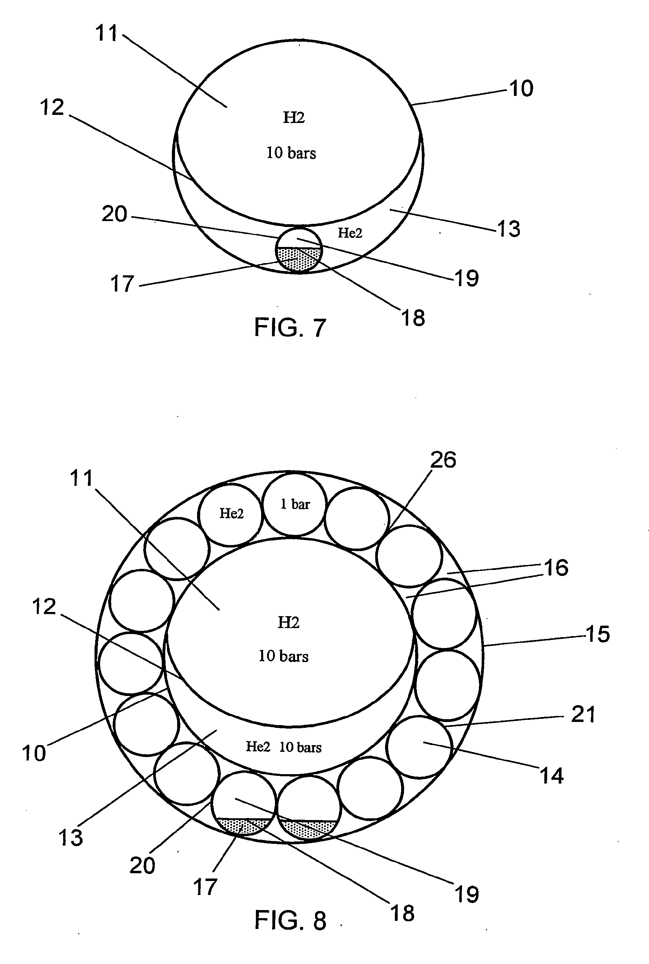

On a dessiné sur la figure 7 de la planche 3/7 une vue schématique en coupe d'un aérostat ayant un ballonnet (20) pour le lestage par un liquide.

Un des principal problème des ballons "plus légers que l'air" est de régler leur altitude.

Dans le dispositif objet de l'invention, le fait que l'aérostat (1) soit relié au véhicule tracteur (3) ou (4) ou (5) par un câble (2) permet de joindre à ce câble (2) un tuyau qui permet de lester ou de délester l'aérostat (1) avec un liquide, par exemple avec de l'eau.

Un ballonnet (20) permet le stockage du liquide de lestage.

Une membrane souple (18) sépare le liquide (17) d'une partie (19) remplie d'un gaz inerte, par exemple de l'hélium.

Plusieurs ballonnets (20) répartis dans le ballon (1) permettent de régler l'assiette du ballon (1) en faisant circuler le liquide de lestage entre eux.

Pour les ballonnets (20) on utilise de préférence des sphères, et pas des boudins longs, car sinon on a un effet de carène liquide qui amplifie les mouvements.

Le véhicule tracteur (3) ou (4) ou (5) transporte le liquide de lestage nécessaire pour le ballon (1).

Comme liquide de lestage on peut par exemple utiliser de l'eau distillée pour éviter l'encrassement des canalisations, additionnée d'un produit antigel comme par exemple du glycol.

Au retour vers le lieu de production de l'hydrogène, le ballon (1) est allégé car il a été vidé de l'hydrogène, donc pour alourdir le ballon (1) on rempli des ballonnets (20) avec de l'eau (17) qui peut être utilisée pour être électrolysée sur le lieu de production de l'hydrogène.

Pour l'eau supplémentaire, on utilise des ballonnets (20) différents où on ne met pas d'antigel.

Ce système de lestage permet de poser le ballon (1) sur terre ou sur mer en cas de vent trop fort et de le maintenir posé en l'alourdissant.

On a dessiné sur la figure 8 de la planche 3/7 une vue schématique en coupe d'un aérostat sécurisé par une double enveloppe (15) et un gaz inerte.

Afin d'éviter au maximum les risques de fuites, les risques de percement de l'enveloppe du ballon (1), et aussi que de l'hydrogène puisse être au contact de l'air, une solution intéressante est d'avoir un système de double enveloppe. On dispose une enveloppe supplémentaire (15) autour de la première enveloppe (10), entre les deux enveloppes (10) et (15) on met un gaz inerte comme par exemple de l'hélium.

Une amélioration est de placer des ballonnets (14) remplis avec un gaz inerte comme par exemple de l'hélium, entre les deux enveloppes (10) et (15).

Les aérostats ont ainsi un système de double coque comme les nouveaux pétroliers.

Les ballonnets (14) sont de préférence fixés entre eux à leur point de contact (26), ainsi qu'aux enveloppes (10) et (15).

Les parties (16) entre les ballonnets (14) sont aussi remplies avec un gaz inerte, par exemple avec de l'hélium.

Le gaz inerte dans les ballonnets (14) et dans les parties (16) entre les ballonnets (14) est à la pression de 1 bar, indépendamment du remplissage de l'hydrogène.

L'hydrogène et l'hélium diffusent très facilement à travers les matériaux, car leurs molécules sont très petites. On place des détecteurs d'hydrogène dans les parties devant contenir uniquement de l'hélium, pour être informé en cas de fuite d'hydrogène plus importante qu'une simple diffusion à travers les parois, surtout en haut où l'hydrogène pourrait s'accumuler (on fait un piège à hydrogène).

De temps en temps on retraite l'hélium pour éliminer l'hydrogène qui aurait pu s'y mélanger, car l'hydrogène diffuse à travers les parois vers l'hélium.

Avant le premier remplissage des parties contenant de l'hydrogène (11) et du gaz inerte (13) (14) (16) (19) on les rempli avec de l'azote qui est un gaz inerte pour enlever l'air et donc l'oxygène.

Pour l'enveloppe intérieure (10) on utilise de préférence des fibres aramides, car cette enveloppe (10) doit résister à une pression de 10 à 13 bars tout en étant légère, et du polyéthylène très haute densité pour une couche intérieure et extérieure rendant cette enveloppe étanche à l'hydrogène et à l'hélium.

Les ballonnets (14) et l'enveloppe extérieure (15) doivent supporter une pression de 1 bar, l'épaisseur peut être plus faible que pour l'enveloppe intérieure (10).

L'enveloppe extérieure (15) est de préférence composite, par exemple une couche centrale en fibres aramides pour la solidité, une couche externe résistante aux ultra violets et aux agressions météorologiques, une couche interne en polyéthylène très haute densité pour l'étanchéité à l'hélium.

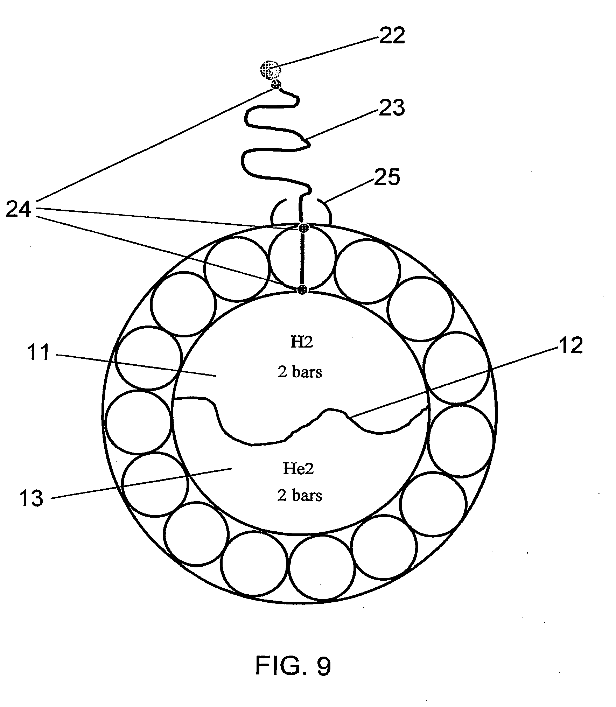

On a dessiné sur la figure 9 de la planche 4/7 une vue schématique en coupe d'un aérostat sécurisé ayant un dispositif de vidange de l'hydrogène.

En cas de problème, le fait d'avoir une poche d'hélium comprimé (13) a de plus l'avantage de permettre de vider le ballon (1) de la totalité de l'hydrogène contenu (11), en exerçant une pression supplémentaire, et aussi de maintenir le ballon (1) en vol.

En cas de problème, un petit ballon (22) part flotter le plus loin possible du ballon (1), il entraîne un tuyau souple (23) d'évacuation d'urgence de l'hydrogène, des électrovannes (24) s'ouvrent pour laisser passer l'hydrogène. Le petit ballon (22) est gonflé avec un gaz inerte plus léger que l'air, par exemple de l'hélium.

Un emplacement (25) sur le haut du ballon (1) stocke le dispositif de vidange d'urgence qui peut être libéré par télécommande depuis le véhicule tracteur (3) ou (4) ou (5). Si le câble tracteur (2) cède, ou si le câble (2) est décroché volontairement il y a vidange automatique.

Par exemple dans le câble tracteur (2) il y a un faible courant électrique qui circule depuis le véhicule tracteur (3) ou (4) ou (5), si ce courant est interrompu par exemple suite à la rupture du câble (2), le ballon (1) se vide automatiquement.

Puis le ballon (1) se pose tout seul en relâchant un peu d'hélium.

Un système permet de décrocher le câble (2) au niveau du ballon (1), ou au niveau du véhicule tracteur (3) ou (4) ou (5), en cas d'accrochage du câble (2) à un arbre ou en cas d'autres problèmes (on peut le télécommander).

L'hydrogène diffuse très rapidement dans l'air.

Mais le relâchement d'hydrogène et à éviter car c'est une perte de production, et l'hydrogène relâché pourrait contribuer à détruire la couche d'ozone, etc.

Le vidangeage de l'hydrogène n'est effectué qu'en cas extrême : tempête imprévue, problème sur les véhicules tracteurs (3) ou (4) ou (5), etc.

Quand le ballon est rempli à cent pour cent d'hydrogène, il est en dehors du pourcentage d'inflammation, de détonation et de déflagration.

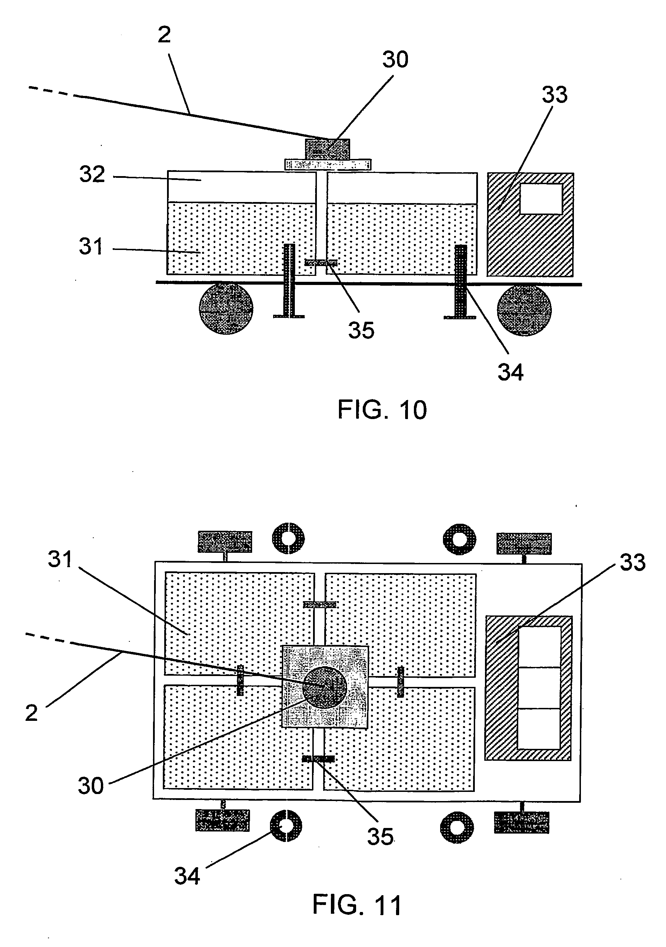

On a dessiné sur la figure 10 de la planche 5/7 une vue schématique en coupe d'un camion conçu pour tracter les aérostats remplis d'hydrogène.

On a dessiné sur la figure 11 de la planche 5/7 une vue schématique de dessus d'un camion conçu pour tracter les aérostats remplis d'hydrogène.

Les véhicules tracteurs terrestres (3) sont de préférence des camions tous terrains construits spécialement, ils sont très larges pour une meilleure stabilité.

Un treuil pivotant (30) permet de treuiller le câble (2).

Sur le treuil (30) il y a un système d'amortissement du câble (2) qui gère les surtensions sur le câble (2) et qui relâche automatiquement le câble (2) et le retend automatiquement.

Le véhicule tracteur (3) ou (4) transporte le liquide nécessaire au lestage ou au délestage du ballon (1), le liquide stabilise et alourdi le camion (3) ou le bateau (4), il y a deux séries de citernes indépendantes (31) pour plus de sécurité, par exemple s'il y a une fuite.

Des tuyaux (35) permettent la circulation (à faible débit) entre les citernes (31) pour équilibrer les citernes (31).

Les véhicules tracteurs terrestres (3) circulent dans des déserts où il y a des risques d'ensablement, ils ne doivent jamais s'ensabler, il y a donc un système de désensablage rapide avec des vérins (34).

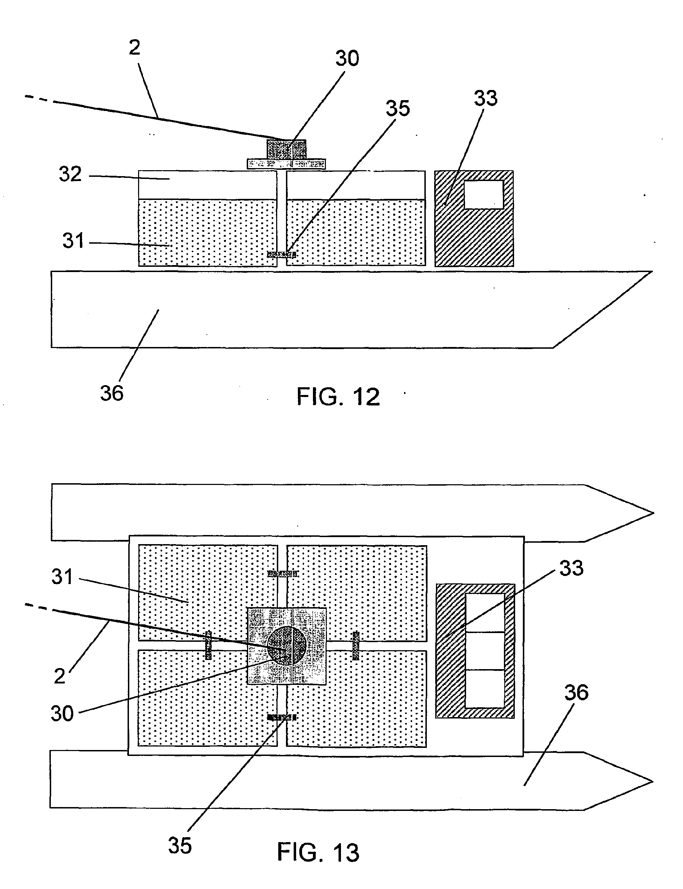

On a dessiné sur la figure 12 de la planche 6/7 une vue schématique en coupe d'un bateau conçu pour tracter les aérostats remplis d'hydrogène.

On a dessiné sur la figure 13 de la planche 6/7 une vue schématique de dessus d'un bateau conçu pour tracter les aérostats remplis d'hydrogène.

Pour le bateau tracteur (4) on utilisera de préférence un bateau multi-coques de type catamaran pour sa grande stabilité latérale, et pour ne pas se retourner si l'aérostat (1) tire fortement sur le câble (2) à cause du vent.

On a dessiné sur la figure 15 de la planche 7/7 une vue schématique en coupe d'un câble (2) permettant de tracter un aérostat (1).

Le fait d'avoir un câble (2) reliant le véhicule tracteur (3) ou (4) ou (5) et l'aérostat (1) permet de plus d'alimenter l'aérostat (1) en électricité, de le lester ou de le délester, d'échanger des données, de transmettre des commandes, et d'évacuer les charges électrostatiques.

Le câble (2) peut être composé :
- d'un câble tracteur (41) qui transmet la force de traction depuis le véhicule tracteur (3) ou (4) ou (5) vers l'aérostat (1), ce câble (41) peut être par exemple en fibres aramides, ou en fibre de carbone;
- d'un tuyau (42) permettant de transférer le liquide de lestage entre le véhicule tracteur (3) ou (4) ou (5) et l'aérostat (1);
- d'un câble électrique (43) alimentant l'aérostat (1) en électricité depuis le véhicule tracteur (3) ou (4) ou (5);
- d'un câble (44) transmettant des données depuis l'aérostat (1) vers le véhicule tracteur (3) ou (4) ou (5);
- d'un câble (45) transmettant des informations de commande depuis le véhicule tracteur (3) ou (4) ou (5) vers l'aérostat (1);
- d'un câble (46) évacuant les charges électrostatiques depuis l'aérostat (1) vers le véhicule tracteur (3) ou (4);
- d'une gaine (48) résistante aux agressions extérieures et aux frottements.

Avec le dispositif objet de l'invention, il est aussi possible de transporter d'autres gaz que l'hydrogène, par exemple du méthane, du butane, du propane et tous les gaz naturels.

Le gaz naturel est parfois utilisé dans l'aérostation pour sustenter les aérostats car le gaz naturel a la propriété d'être plus léger que l'air.

Par exemple un mètre cube de méthane à la pression de 1 bar pèse 0,651 Kg, ce qui est plus léger que l'air, on peut donc transporter du gaz naturel avec le dispositif objet de l'invention, on peut même le comprimer légèrement, par exemple à 1,5 bar.

Il est aussi possible de transporter de l'ammoniac dont un mètre cube pèse 0,6813 Kg à la pression de 1 bar, ou de l'oxygène dont un mètre cube pèse 1,4291 Kg à la pression de 1 bar et à la température de 0° Celsius.

Il est possible d'utiliser un véhicule tracteur amphibie qui a alors la fonction de véhicule tracteur terrestre et de bateau tracteur, mais il est mieux d'avoir deux véhicules distincts plus adaptés donc plus efficaces.

Il est aussi possible d'avoir un ballon transportant de l'hydrogène suivant l'invention, mais qui ne soit pas tracté par un câble (2) et un véhicule tracteur (3) ou (4) ou (5), par exemple en étant piloté ou télécommandé.

Mais dans ce cas on perd beaucoup des avantages de l'invention.

Il est possible au lieu d'avoir un seul ballon d'hydrogène (10) d'en avoir plusieurs en combinaisons et arrangements différents, mais c'est mieux d'avoir un seul ballon (10).

## Revendications

1. Dispositif sécurisé, à bas coût et à contenance optimisée de transport et de stockage d'un gaz inflammable,
en particulier de gaz naturel ou d'hydrogène gazeux comprenant un aérostat (1) dans lequel le gaz inflammable à transporter ou à stocker est placé,
**caractérisé**
**en ce que** l'aérostat (1) est un aérostat souple de type ballon à gaz,
**en ce que** le contenant du gaz inflammable à transporter ou
à stocker est l'enveloppe (10) dudit aérostat souple (1), en ce qu'il comporte un câble (2),
et **en ce qu'**il comporte un véhicule tractant ledit aérostat souple (1) avec ledit câble (2), ledit véhicule tracteur étant un véhicule terrestre (3) ou un bateau (4) ou un aérostat (5).

2. Dispositif sécurisé, à bas coût et à contenance optimisée de transport et de stockage d'un gaz inflammable,
en particulier de gaz naturel ou d'hydrogène gazeux selon la revendication 1
comprenant un aérostat souple de type ballon à gaz (1) dans lequel le gaz inflammable à transporter ou à stocker est placé,
comportant une enveloppe (10),
**caractérisé**
**en ce qu'**il comporte une porche (13) contenant un gaz inerte, en ce qu'il comporte une membrane souple (12) séparant le gaz inerte et le gaz inflammable à transporter ou à stocker,
**en ce que** ledit gaz inerte est comprimé par la pression du gaz inflammable à transporter ou à stocker,
et **en ce que** ledit gaz inerte comprimé permet l'expulsion du gaz inflammable à transporter ou à stocker.

3. Dispositif sécurisé, à bas coût et à contenance
optimisée de transport et de stockage d'un gaz inflammable, en particulier de gaz naturel ou d'hydrogène gazeux
selon l'une des revendications précédentes
comprenant un aérostat souple de type ballon à gaz (1) dans lequel le gaz inflammable à transporter ou à stocker est placé,
comportant une enveloppe (10),
**caractérisé**
**en ce qu'**il comporte une enveloppe supplémentaire (15),
et **en ce que** la partie séparant ladite enveloppe (10) et ladite enveloppe (15) est remplie d'un gaz inerte.

4. Dispositif sécurisé, à bas coût et à contenance optimisée de transport et de stockage d'un gaz inflammable, en particulier de gaz naturel ou d'hydrogène gazeux selon la revendication précédente
**caractérisé**
**en ce qu'**il comporte des ballonnets (14) remplis d'un gaz inerte placés entre l'enveloppe (10) et l'enveloppe supplémentaire (15).

5. Dispositif sécurisé, à bas coût et à contenance optimisée de transport et de stockage d'un gaz inflammable, en particulier de gaz naturel ou d'hydrogène gazeux selon l'une des revendications précédentes
comprenant un aérostat souple de type ballon à gaz (1) dans lequel le gaz inflammable à transporter ou à stocker est placé,
**caractérisé**
**en ce qu'**il comporte un ballon (22) rempli d'un gaz inerte plus léger que l'air,
**en ce qu'**il comporte un tuyau (23) reliant ledit aérostat souple (1) et ledit ballon (22),
et **en ce que** le gaz inflammable à transporter ou à stocker peut être évacué dudit aérostat souple (1) par ledit tuyau (23).

6. Dispositif sécurisé, à bas coût et à contenance optimisée de transport et de stockage d'un gaz inflammable, en particulier de gaz naturel ou d'hydrogène gazeux selon l'une des revendications précédentes
**caractérisé**
**en ce que** l'aérostat souple de type ballon à gaz (1) sert de stockage sécurisé, à bas coût et à contenance optimisée du gaz inflammable à transporter
sur le lieu de production du gaz inflammable à transporter ou sur le lieu d'utilisation du gaz inflammable à transporter.

7. Dispositif sécurisé, à bas coût et à contenance
optimisée de transport et de stockage d'un gaz inflammable, en particulier de gaz naturel ou d'hydrogène gazeux
selon l'une des revendications 1 à 5
**caractérisé**
**en ce qu'**il comporte un tuyau (42) reliant le véhicule tracteur (3) ou (4) ou (5) et l'aérostat souple de type ballon à gaz (1),
**en ce que** ledit tuyau (42) est fixé sur le câble de tractage (2),
**en ce que** ledit tuyau (42) permet la circulation d'un liquide entre ledit véhicule tracteur (3) ou (4) ou (5) et ledit aérostat souple (1).

8. Dispositif sécurisé, à bas coût et à contenance optimisée de transport et de stockage d'un gaz inflammable, en particulier de gaz naturel ou d'hydrogène gazeux selon l'une des revendications 1 à 5
**caractérisé**
**en ce qu'**il comporte un câble électrique reliant le véhicule tracteur (3) où (4) ou (5) et l'aérostat souple de type ballon à gaz (1),
**en ce que** ledit câble électrique est fixé sur le câble de tractage (2),
**en ce que** ledit câble électrique permet la circulation d'électricité depuis ledit véhicule tracteur (3) ou (4) ou (5) vers ledit aérostat souple (1).

9. Dispositif sécurisé, à bas coût et à contenance optimisée de transport et de stockage d'un gaz inflammable selon l'une des revendications précédentes
**caractérisé**
**en ce que** le gaz inflammable qui est transporté ou qui est stocké dans l'aérostat souple de type ballon à gaz (1).est un des composant du gaz naturel.

## Claims

1. Secure device, at low cost and with an optimized capacity for transporting and storing an inflammable gas, particularly natural gas or gaseous hydrogen comprising an aerostat (1) in which the inflammable gas to be transported or stored is placed,
**characterized**
**in that** the aerostat (1) is a flexible aerostat of the gas balloon type,
**in that** the container of the inflammable gas to be transported or stored is the envelope (10) of said flexible aerostat (1),
**in that** it comprises a cable (2),
and **in that** it comprises a vehicle towing said flexible aerostat (1) with said cable (2),
said towing vehicle being a terrestrial vehicle (3) or a ship (4) or an aerostat (5).

2. Secure device, at low cost and with an optimized capacity for transporting and storing an inflammable gas, particularly natural gas or gaseous hydrogen according to claim 1
comprising a flexible aerostat of the gas balloon type (1) in which the inflammable gas to be transported or stored is placed,
comprising an envelope (10),
**characterized**
**in that** it comprises a pocket (13) containing an inert gas,
**in that** it comprises a flexible membrane (12) separating the inert gas from the inflammable gas to be transported or stored,
**in that** said inert gas is compressed by the pressure of the inflammable gas to be transported or stored,
and **in that** said compressed inert gas permits the expulsion of the inflammable gas to be transported or stored.

3. Secure device, at low cost and with an optimized capacity for transporting and storing an inflammable gas, particularly natural gas or gaseous hydrogen according to one of the previous claims
comprising a flexible aerostat of the gas balloon type (1) in which the inflammable gas to be transported or stored is placed,
comprising an envelope (10),
**characterized**
**in that** it comprises an additional envelope (15),
and **in that** the part separating said envelope (10) from said envelope (15) is filled with an inert gas.

4. Secure device, at low cost and with an optimized capacity for transporting and storing an inflammable gas, particularly natural gas or gaseous hydrogen according to the previous claim
**characterized**
**in that** it comprises small balloons (14) filled with an inert gas and placed between the envelope (10) and the additional envelope (15).

5. Secure device, at low cost and with an optimized capacity for transporting and storing an inflammable gas, particularly natural gas or gaseous hydrogen according to one of the previous claims
comprising a flexible aerostat of the gas balloon type (1) in which the inflammable gas to be transported or stored is placed,
**characterized**
**in that** it comprises a balloon (22) filled with an inert gas lighter than air,
**in that** it comprises a pipe (23) linking said flexible aerostat (1) to said balloon (22),
and **in that** the inflammable gas to be transported or stored can be evacuated from said flexible aerostat (1) through said pipe (23).

6. Secure device, at low cost and with an optimized capacity for transporting and storing an inflammable gas, particularly natural gas or gaseous hydrogen according to one of the previous claims
**characterized**
**in that** the flexible aerostat of the gas balloon type (1) serves as secure storage, at low cost and with an optimal capacity, of the inflammable gas to be transported at the site of production of the inflammable gas to be transported or
at the place of use of the inflammable gas to be transported.

7. Secure device, at low cost and with an optimized capacity for transporting and storing an inflammable gas, particularly natural gas or gaseous hydrogen according to one of the claims 1 to 5
**characterized**
**in that** it comprises a pipe (42) linking the towing vehicle (3) or (4) or (5) to the flexible aerostat of the gas balloon type (1),
**in that** said pipe (42) is fixed to the towing cable (2), in that said pipe (42) permits the circulation of a liquid between said towing vehicle (3) or (4) or (5) and said flexible aerostat (1).

8. Secure device, at low cost and with an optimized capacity for transporting and storing an inflammable gas, particularly natural gas or gaseous hydrogen according to one of the claims 1 to 5
**characterized**
**in that** it comprises an electric cable linking the towing vehicle (3) or (4) or (5) to the flexible aerostat of the gas balloon type (1),
**in that** said electric cable is fixed to the towing cable (2),
**in that** said electric cable permits the circulation of electricity from said towing vehicle (3) or (4) or (5) to the flexible aerostat (1).

9. Secure device, at low cost and with an optimized capacity for transporting and storing an inflammable gas, according to one of the previous claims
**characterized**
**in that** the inflammable gas which is transported or which is stored in the flexible aerostat of the gas balloon type (1) is one of the components of the natural gas.

## Patentansprüche

1. Kostengünstige und mit optimierter Füllmenge Sicherheitsvorrichtung zum Transport und zur Lagerung des entflammbaren Gases, besonders des Naturgases oder Wasserstoffgases, bestehend aus einem Ballon (1), in dem sich das entflammbare zu transportierende oder zu lagernde Gas befindet,
**dadurch gekennzeichnet,**
**dass** der Ballon (1) ein weicher Ballon vom Typ Gasballon ist,
**dass** der Behälter für das entflammbare zu transportierende und zu lagernde Gas die Hülle (10) von diesem weichen Ballon (1) ist,
**dass** er ein Kabel (2) beinhaltet,
**dass** er ein Fahrzeug beinhaltet, das den oben genannten weichen Ballon (1) mit dem oben genannten Kabel (2) zieht,
das oben genannte ziehende Fahrzeug ist ein Landfahrzeug (3) oder ein Wasserfahrzeug (4) oder ein Ballon (5).

2. Vorrichtung nach Anspruch 1, bestehend aus einem weichen Ballon vom Typ Gasballon (1), in dem sich das entflammbare zu transportierende oder zu lagernde Gas befindet, beinhaltend eine Hülle (10),
**dadurch gekennzeichnet,**
**dass** sie einen Beutel (13) enthält, der inertes Gas beinhaltet,
**dass** sie eine weiche Membran (12) beinhaltet, die inertes Gas vom entflammbaren zu transportienden oder zu lagernden Gas abtrennt,
**dass** das oben genannte inerte Gas durch den Druck des entflammbaren zu transportierenden oder zu lagernden Gases komprimiert wird,
**dass** das oben genannte komprimierte inerte Gas die Austreibung des entflammbaren zu transportierenden oder zu lagernden Gases ermöglicht.

3. Vorrichtung nach einem der vorhergehenden Ansprüche, bestehend aus einem weichen Ballon vom Typ Gasballon (1), in dem sich das entflammbare zu transportierende oder zu lagernde Gas befindet, beinhaltend eine Hülle (10),
**dadurch gekennzeichnet,**
**dass** sie eine zusätzliche Hülle (15) beinhaltet,
**dass** der Teil, der die oben genannte Hülle (10) von der oben genannten Hülle (15) trennt, mit dem inerten Gas gefüllt ist.

4. Vorrichtung nach Anspruch 3,
**dadurch gekennzeichnet,**
**dass** sie aus kleinen mit inertem Gas gefüllten Ballonen (14) besteht, die sich zwischen der Hülle (10) und der zusätzlichen Hülle (15) befinden.

5. Vorrichtung nach einem der vorhergehenden Ansprüche, bestehend aus einem weichen Ballon vom Typ Gasballon (1), in dem sich das entflammbare das zu transportierende oder zu lagernde Gas befindet,
**dadurch gekennzeichnet,**
**dass** sie einen Ballon (22) enthält, der mit inertem, leichterem als die Luft Gas gefüllt ist,
**dass** sie einen Schlauch (23) enthält, der den oben genannten weichen Ballon (1) mit dem oben genannten Ballon (22) verbindet,
**dass** das entflammbare transportierte oder gelagerte Gas vom oben genannten weichen Ballon (1) durch den oben genannten Schlauch (23) ausgelagert werden kann.

6. Vorrichtung nach einem der vorhergehenden Ansprüche,
**dadurch gekennzeichnet,**
**dass** der weiche Ballon vom Typ Gasballon (1) der sicheren, kostengünstigen und mit optimierter Füllmenge Lagerung des entflammbaren zu transportierenden Gases dient,
auf die Stelle, wo das entflammbare zu transportierende Gas produziert wird,
auf die Stelle, wo das entflammbare zu transportierende Gas genutzt wird.

7. Vorrichtung nach einem der Ansprüche 1 bis 5,
**dadurch gekennzeichnet,**
**dass** sie einen Schlauch (42) enthält, der das ziehende Fahrzeug (3) oder (4) oder (5) mit dem weichen Ballon vom Typ Gasballon (1) verbindet,
**dass** der oben genannte Schlauch (42) am Zugkabel (2) befestigt ist,
**dass** der oben genannte Schlauch (42) den Flüssigkeitsverkehr zwischen dem oben genannten ziehenden Fahrzeug (3) oder (4) oder (5) und dem oben genannten weichen Ballon (1) ermöglicht.

8. Vorrichtung nach einem der Ansprüche 1 bis 5,
**dadurch gekennzeichnet,**
**dass** sie ein Stromkabel enthält, das das ziehende Fahrzeug (3) oder (4) oder (5) und den weichen Ballon vom Typ Gasballon (1) verbindet,
**dass** das oben genannte Stromkabel am Zugkabel (2) befestigt ist,
**dass** das oben genannte Stromkabel den Stromkreislauf vom oben genannten ziehenden Fahrzeug (3) oder (4) oder (5) zum oben genannten weichen Ballon (1) ermöglicht.

9. Kostengünstige und mit optimierter Füllmenge Sicherheitsvorrichtung zum Transport und zur Lagerung des entflammbaren Gases, nach einem der vorhergehenden Ansprüche,
**dadurch gekennzeichnet,**
**dass** das entflammbare Gas, das im weichen Ballon vom Typ Gasballon (1) transportiert oder gelagert wird, ist einer der Bestandteile des Naturgases.
